# EUROPEAN PATENT APPLICATION

(11) **EP 4 664 622 A1**
(43) Date of publication of application: **17.12.2025**
(21) Application number: 25167338.0
(22) Date of filing: 31.03.2025
(51) Int. Cl.: H01M 50/159, H01M 50/164, H01M 50/342, H01M 50/152, H01M 50/167, H01M 50/186

(54) **COVER PLATE, BATTERY, AND ELECTRONIC DEVICE**

(30) Priority: 19.04.2024 CN 202410475515
(71) Applicant: AESC Japan Ltd., Yokohama-Shi, Kanagawa 220-0012 (JP)
(72) Inventor: QIAN, Jia, Wuxi City, Jiangsu Province, 214443 (CN)
(74) Representative: Becker, Eberhard

(57) **Abstract**

A cover plate (100), a battery (600) and an electronic device is provided. The cover plate (100) includes an integrally formed non-structurally fragile portion (102) and a non-structurally fragile portion (101). The structural strength of the non-structurally fragile portion (101) is lower than the structural strength of the non-structurally fragile portion (102). The non-structurally fragile portion (101) is configured to be destroyed when the battery (600) releases internal pressure. At least part of the outer side of the non-structurally fragile portion (101) is covered with a phosphorus-containing nickel plating layer (103).

## Description

### BACKGROUND

### Field of the Disclosure

The present disclosure relates to the field of battery technology, particularly to a cover plate, a battery, and an electronic device.

### Description of Related Art

With the advancement of socioeconomic development, an increasing number of electronic devices are utilizing cylindrical batteries as energy storage and supply mechanisms. Such applications include, but are not limited to, new energy vehicles, telecommunication base stations, and energy storage containers.

Some battery models available in the market incorporate a structurally fragile portion on their cover plates. The structurally fragile portion is designed to guide the release of high-pressure gases in the event of a short circuit or thermal runaway occurring within the battery.

However, due to the direct contact between the structurally fragile portion and the internal electrolyte of the battery, along with the internal temperature generated during battery operation, the electrolyte might produce gases or liquids. This can lead to rusting and corrosion of the structurally fragile portion, resulting in abnormal conditions such as leakage. Consequently, these factors might cause abnormal voltage drop, specifically the degradation of the voltage of the battery.

### SUMMARY OF THE DISCLOSURE

Given the above-mentioned issues, the present disclosure provides a cover plate, a battery, and an electronic device, wherein a phosphorus-containing nickel plating layer is plated on the outside of at least part of the structurally fragile portion, which may avoid rusting and corrosion at the structurally fragile portion. When the battery is stored at high temperature, there is no abnormal pressure drop.

The present disclosure provides a cover plate for a battery, wherein the cover plate includes an integrally formed non-structurally fragile portion and a structurally fragile portion. The structural strength of the structurally fragile portion is lower than the structural strength of the non-structurally fragile portion. The structurally fragile portion is configured to be destroyed when the battery releases internal pressure. At least a part of the structurally fragile portion is covered with a phosphorus-containing nickel plating layer.

In some embodiments, the cover plate includes a first surface and a second surface that are opposite to each other along a thickness direction thereof. A portion of the structure of the first surface is recessed towards the second surface to form a groove. The part of the cover plate corresponding to the groove constitutes the structurally fragile portion. The phosphorus-containing nickel plating layer covers the wall of the groove.

In some embodiments, the thickness of the structurally fragile portion is less than the thickness of the non-structurally fragile portion.

In some embodiments, the phosphorus-containing nickel plating layer at least partially covers the non-structurally fragile portion.

In some embodiments, the phosphorus content in the phosphorus-containing nickel plating layer ranges from 2wt% to 20wt%.

In some embodiments, the phosphorus content in the phosphorus-containing nickel plating layer ranges from 4wt% to 11wt%.

In some embodiments, the thickness of the phosphorus-containing nickel plating layer ranges from 2µm to 6µm.

In some embodiments, the phosphorus-containing nickel plating layer includes: a first nickel plating layer, the first nickel plating layer covering a first surface of the cover plate; a second nickel plating layer, the second nickel plating layer being located on an outer surface of the first nickel plating layer away from the cover plate, the second nickel plating layer containing phosphorus element.

In some embodiments, the ratio of the thickness of the first nickel plating layer to the thickness of the second nickel plating layer ranges from 0.5 to 1.5.

In some embodiments, the thickness of the phosphorus-containing nickel plating layer ranges from 5µm to 8µm.

A second aspect of the present disclosure further provides a battery, including: an electrode assembly; a housing, wherein the housing includes an accommodating cavity, the housing has an installation opening at one end along the axial direction, the electrode assembly is disposed in the accommodating cavity, and the housing is connected with the negative electrode of the electrode assembly; the cover plate according to the first aspect of the present disclosure, wherein the cover plate is disposed at the installation opening and seals the accommodating cavity.

In some embodiments, the periphery of the installation opening is provided with a curled edge portion extending inward along the radial direction of the housing, and a position adjacent to the installation opening of the housing is also provided with a crimping portion protruding inward. The crimping portion and the curled edge portion are spaced apart along the axial direction of the housing and jointly clamp the cover plate. The electrode assembly and the cover plate are respectively located on opposite sides of the crimping portion along the axial direction of the housing. The battery further includes: a plastic member, which is arranged around the periphery of the cover plate to separate the cover plate from the housing.

A third aspect of the present disclosure further provides an electronic device, including: a device body. The device body includes a battery compartment; the battery according to the second aspect of the present disclosure, the battery being disposed in the battery compartment and electrically connected with the device body.

The cover plate of the present disclosure is designed in a manner that a phosphorus-containing nickel plating layer is plated on the outside of at least a portion of the structurally fragile portion, thus greatly enhancing the corrosion resistance ability of the cover plate. In this way, it is possible to ensure that when the battery is being used, rust and corrosion will not occur at the position of the structurally fragile portion, the structure of the cover plate is reliable, and the service life thereof is prolonged. Moreover, when the battery is stored at high temperature (for example, stored at temperatures such as 55°C, 70°C, etc.), there is no abnormal voltage drop (no voltage decay), and the power supply performance is reliable.

### BRIEF DESCRIPTION OF THE DRAWINGS

In order to more clearly illustrate the technical solutions in the implementation examples or related art of this application, a brief introduction will be given below to the drawings that need to be used in the description of the embodiments or related art. Evidently, the drawings described below are some embodiments of this application. For those skilled in the art, other drawings may be obtained based on these drawings without creative effort.
FIG. 1 is a schematic diagram of the electronic device of the present disclosure when implemented as a vehicle.
FIG. 2 is a structural schematic diagram of a battery according to some embodiments of the present disclosure.
FIG. 3 is a partial cross-sectional diagram of a battery according to some embodiments of the present disclosure.
FIG. 4 is an enlarged view of the circled portion A in FIG. 3 in some embodiments.
FIG. 5 is an enlarged view of the circled portion A in FIG. 3 in some other embodiments.
FIG. 6 is an enlarged view of the circled portion A in FIG. 3 in still some other embodiments.

### DESCRIPTION OF EMBODIMENTS

In order to make the above-mentioned objectives, features, and advantages of the present disclosure more evident and understandable, the technical solutions in the embodiments of the present disclosure will be described clearly and completely in conjunction with the accompanying drawings of the embodiments of the present disclosure. Clearly, the described embodiments are only a portion of the embodiments of the present disclosure, not all of the embodiments. Based on the embodiments in the present disclosure, all other embodiments obtained by those skilled in the art without creative efforts fall within the scope to be protected by the present disclosure.

With the advancement of socioeconomic development, an increasing number of electronic devices are utilizing batteries 600 as energy storage and supply mechanisms.

The electronic device may be a vehicle 1000, mobile phone, portable device, laptop computer, ship, spacecraft, electric toy, and electric tool, etc. The vehicle 1000 may be a gasoline vehicle, gas vehicle or new energy vehicle. The new energy vehicle may be a pure electric vehicle, hybrid vehicle or range-extended vehicle, etc. The spacecraft includes airplanes, rockets, space shuttles and spaceships, etc. The electric toys include stationary or mobile electric toys, for example, game consoles, electric car toys, electric ship toys and electric airplane toys, etc. The electric tools include metal cutting electric tools, grinding electric tools, assembly electric tools and railway electric tools, such as electric drills, electric grinders, electric wrenches, electric screwdrivers, electric hammers, impact drills, concrete vibrators and electric planers, etc. The electronic device may also be an energy storage electronic device that stores energy and then discharges externally. The embodiments of the present disclosure do not impose special restrictions on the above electronic devices.

The electronic device may include: a device body and a battery 600. The device body may include a compartment of the battery 600, where the battery 600 is situated within the battery compartment and electrically connected with the device body. For example, a power interface may be disposed within the battery compartment, and the battery 600 may be connected with the power interface.

The following embodiment is explained using a vehicle 1000 as an example of the electronic device for convenience of explanation.

A battery 600 may be disposed inside the vehicle 1000. The battery 600 may be disposed at the bottom, front, or rear portion of the car body 1001. The battery 600 may be used for powering the vehicle 1000. For example, the battery 600 may serve as the operating power source for the vehicle 1000.

The vehicle 1000 may further include a controller and a motor, wherein the controller is configured to control the battery 600 to power the motor, for example, for the power requirements of starting, navigating, and driving the vehicle 1000.

In this embodiment of the present disclosure, the battery 600 may be a primary battery or a secondary battery. A primary battery refers to a battery that cannot be recharged and reused after discharge, while a secondary battery refers to a battery that can be reactivated through charging after discharge and continue to be used. The battery 600 may be a lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, lead-acid battery, etc. This embodiment of the present disclosure is not limited to the above. The battery 600 mentioned in this embodiment of the present disclosure may include one or more battery cells to provide a single physical module with higher voltage and capacity. When there are multiple battery cells, they are connected in series, parallel, or a combination of both through a current collecting component.

Taking the battery 600 in the embodiment of the present disclosure as a lithium-ion battery for example, the lithium-ion battery may be a primary lithium battery or a secondary lithium battery. The battery 600 includes: a positive electrode sheet, a negative electrode sheet, a separator located between the positive electrode and the negative electrode, and an electrolyte. The positive electrode sheet includes a positive electrode current collector and a positive electrode active material coated on the surface of the positive electrode current collector. The negative electrode sheet includes a negative electrode current collector and a negative electrode active material coated on the surface of the negative electrode current collector.

The positive electrode active material used in the positive electrode sheet in the embodiment of the present disclosure may be a lithium-containing composite oxide. Specifically, the positive electrode active material may be LiMnO₂, LiFeO₂, LiMn₂O₄, Li₂FeSiO₄, LiNi_{1/3}CO_{1/3}Mn_{1/3}O₂, LiNi₅CO₂Mn₃O₂, LizNi_{(1-x-y)}CoxMyO₂ (where 0.01≤x≤0.20, 0≤y≤0.20, 0.97≤z≤1.20, M represents at least one element selected from Mn, V, Mg, Mo, Nb and Al), LiFePO₄ and LizCO₍₁₋ₓ₎MxO₂ (where 0≤x≤0.1, 0.97≤z≤1.20, M represents at least one element selected from a group consisting of Mn, Ni, V, Mg, Mo, Nb and Al).

The negative electrode sheet in the embodiment of the present disclosure may use negative electrode active materials that allow lithium intercalation and deintercalation. The negative electrode active materials include, but are not limited to, crystalline carbon (such as natural graphite and artificial graphite), amorphous carbon, carbon-coated graphite, and resin-coated graphite and other carbon materials, or indium oxide, silicon oxide, tin oxide, lithium titanate, zinc oxide, lithium oxide and other oxide materials, and may also be lithium metal or metal materials that can form alloys with lithium. Metals that can form alloys with lithium may include Cu, Sn, Si, Co, Mn, Fe, Sb and Ag. Binary or ternary alloys containing these metals and lithium may also be used as negative electrode active substances. These negative electrode active substances may be used alone or in combination of two or more of the above. From the perspective of high energy density, graphite and other carbon materials may also be used in combination with Si, Si alloys, Si oxides and other Si-based materials.

Moreover, binders, conductive agents and other substances may typically be added to the active material. The amount added may be adjusted within 1% to 50% of the total amount of positive electrode active material according to different requirements.

The conductive agent is a reagent used to guarantee that the electrode possesses good charge and discharge performance. For example, graphite-based materials such as natural graphite and artificial graphite; carbon black-based materials such as carbon black, acetylene black, Ketjen black, channel black, furnace black, lamp black, and thermal black; conductive fibers such as carbon fiber and metal fiber; metal powders such as fluorinated carbon powder, aluminum powder, and nickel powder; conductive whiskers such as zinc oxide and potassium titanate; and conductive metal oxides or polyphenylene derivatives such as titanium dioxide.

The binder is a component that helps bond the active material with the conductive agent and aids in binding the active material to the current collector. The binder may typically be selected from polyvinylidene fluoride, polyvinyl alcohol, carboxymethyl cellulose (CMC), starch, hydroxypropyl cellulose, regenerated cellulose, polyvinylpyrrolidone, tetrafluoroethene, polyethylene, polypropylene, ethylene-propylene-diene terpolymer (EPDM), sulfonated EPDM, styrene-butadiene rubber, fluorine rubber, and various copolymers.

The current collector, serving as the base for supporting the electrode active material, may typically be a metal foil with a thickness of 3 micrometers to 500 micrometers. There are no particular restrictions on the material, as long as the material possesses high electrical conductivity and does not produce chemical reactions in the secondary battery system. For example, the material may be a foil formed by performing surface treatment on nickel, titanium, aluminum, nickel, silver, stainless steel, carbon, etc. The current collector normally has a smooth surface, but fine textures may also be formed on the surface thereof to enhance the adhesion between the positive electrode active material and the current collector. In addition to foils, the current collector may adopt any one or a combination of various forms such as film, mesh, porous, foam, or non-woven fabric.

A separator with high ion permeability and high mechanical strength is disposed between the positive electrode sheet and the negative electrode sheet. The separator typically has a thickness of 9µm to 18µm; a pore size of 5µm to 300µm; an air permeability of 180s/100mL to 380s/100mL; and a porosity of 30% to 50%. As the separator, a sheet or non-woven fabric made of the following substances may be adopted: olefin polymers such as polypropylene; glass fiber or polyethylene, which possess chemical resistance and hydrophobicity.

The electrolyte typically used in the lithium-ion battery prepared as described above may include a non-aqueous solvent, a lithium salt, and additives.

The non-aqueous solvent may be a conventional non-aqueous solvent in this field, preferably an ester solvent, more preferably a carbonate ester solvent. The carbonate ester solvent is preferably one or more selected from ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), and butylene carbonate (BC).

As the lithium salt, at least one of LiPF₆, LiBF₄, LiN(SO₂F)₂ (abbreviated as LiFSI), LiClO₄, LiAsF₆, LiB(C₂O₄)2 (abbreviated as LiBOB), LiBF2(C₂O₄) (abbreviated as LiDFOB), LiN(SO₂RF)₂, and LiN(SO₂F)(SO₂RF) may be selected as an example. Preferably, the content of lithium salt in the electrolyte may be 5% to 20%.

The additive may be preferably selected from one or more of vinylene carbonate (VC), fluoroethylene carbonate (FEC), vinyl ethylene carbonate (VEC), ethylene sulfate (DTD), ethylene sulfite, 1,3-propane sultone (PS), allyl sulfonate, and 1,4-butane sultone. The conventional amount of additive in the electrolyte may be 1% to 4% of the electrolyte, for example, 2%.

The preparation steps of the battery in this embodiment are as follows:

### (1) Preparation of the positive electrode sheet:

The positive electrode active material (for example, LiNi_{0.8}Co_{0.1}Mn_{0.1}O₂), polyvinylidene fluoride used as the binder, and acetylene black as a conductive agent are mixed in a mass ratio of 98:1:1, and an appropriate amount of solvent N-methyl pyrrolidone (NMP) is added. The mixture is stirred using a vacuum stirrer until the positive electrode slurry becomes uniform and transparent, thus obtaining the positive electrode slurry. The positive electrode slurry is uniformly coated on an aluminum foil current collector with a thickness of 16µm, which is then air-dried at room temperature before being transferred to an oven for drying at 80°C to 120°C for 6 hours. The positive electrode sheet is then obtained through cold pressing and cutting.

### (2) Preparation of the negative electrode sheet:

Graphite used as the negative electrode active material, acetylene black used as the conductive agent, sodium carboxymethyl cellulose used as the thickening agent and styrene-butadiene rubber used as the binder are mixed according to a mass ratio of 97:1:1:1, and deionized water is added to obtain a negative electrode slurry under the action of a vacuum mixer. The negative electrode slurry may be uniformly coated on a copper foil current collector with a thickness of 8µm, and subjected to air-drying at room temperature, then transferred to an oven for drying, and then cold pressed and cut to obtain a negative electrode sheet.

### (3) Preparation of the electrolyte:

The organic solvent is a mixture of ethylene carbonate (EC), ethyl methyl carbonate (EMC), and diethyl carbonate (DEC), wherein the volume ratio of EC, EMC, and DEC is 20:20:60. In an argon atmosphere glove box with a water content of <10ppm, the thoroughly dried lithium salt (LiPF₆) is dissolved in the aforementioned organic solvent. After mixing uniformly, the electrolyte is obtained, wherein the concentration of LiPF₆ is 1mol/L.

### (4) Preparation of the separator:

A polypropylene separator film with a thickness of 12µm may be selected.

### (5) Preparation of the battery:

The positive electrode sheet, separator, and negative electrode sheet are wound in sequence, with the separator positioned between the positive and negative electrode sheets to serve an isolating function. Then, the wound bare cell is placed into the housing and assembled to obtain a cylindrical battery.

In some embodiments, the battery 600 may be a battery assembly. When there are multiple battery cells, the multiple battery cells are arranged and fixed to form a battery assembly.

In some embodiments, the battery 600 may be a battery pack 1002, the battery pack 1002 includes a casing and battery cells, the battery cells or battery assembly are accommodated in the casing.

In some embodiments, the casing may serve as portion of the chassis structure of the vehicle 1000. For example, a portion of the casing may form at least a portion of the floor of the vehicle 1000, or a portion of the casing may form at least a portion of the crossbeams and longitudinal beams of the vehicle 1000.

Some battery models available in the market incorporate a structurally fragile portion on their cover plates. The structurally fragile portion is designed to guide the release of high-pressure gases in the event of a short circuit or thermal runaway occurring within the battery. However, the structurally fragile portion is normally formed by etching or stamping and so on. During the processing of the structurally fragile portion, the plating layer on the surface of the cover plate may be easily damaged and fall off, causing the metal to directly contact the electrolyte, which is likely to cause the structurally fragile portion prone to rust and corrode. Additionally, the plating layer itself does not contain phosphorus element or has too little phosphorus content, which may also lead to corrosion after long-term contact with the electrolyte, resulting in abnormal battery voltage drop and other issues.

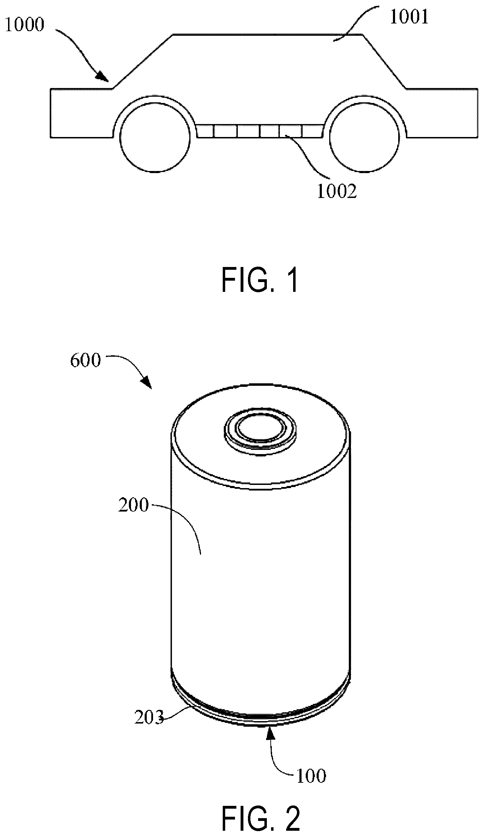

Given this, an embodiment of the present disclosure further provides a cover plate. Referring to FIG. 2 to FIG. 6, the cover plate 100 of this embodiment may be used for a battery 600, and the cover plate 100 may be disposed at the negative electrode end of the battery 600, serving as the negative electrode cover plate 100 of the battery 600.

Specifically, the cover plate 100 includes a non-structurally fragile portion 102 and a structurally fragile portion 101, where the non-structurally fragile portion 102 and the structurally fragile portion 101 are integrally formed to ensure the overall strength and sealing of the cover plate 100 when the battery 600 is in a normal state. The structural strength of the structurally fragile portion 101 is lower than that of the non-structurally fragile portion 102, wherein the structural strength refers to the mechanical properties of the cover plate 100 to resist fracture and excessive deformation. The structurally fragile portion 101 is configured to be destroyed when the battery 600 releases internal pressure. For example, when the battery 600 experiences thermal runaway due to internal short circuit and so on, the high-pressure and high-temperature discharge substances (including gas, electrolyte, etc.) inside the battery 600 may burst through the cover plate 100 from the structurally fragile portion 101, completing the release and avoiding dangerous situations such as explosions. At this time, the structurally fragile portion 101 may be ruptured or detached from the non-structurally fragile portion 102 in various forms.

For example, the structurally fragile portion 101 may be formed in any shape such as square, circular, annular, arc-shaped, U-shaped, H-shaped, etc. The area where the structurally fragile portion 101 is located and the area surrounded by the structurally fragile portion 101 may serve as a pressure relief area. The non-structurally fragile portion 102 may at least partially surround the structurally fragile portion 101 in the circumferential direction. The non-structurally fragile portion 102 may provide installation support for the structurally fragile portion 101.

At least a portion of the structurally fragile portion 101 is covered with a phosphorus-containing nickel plating layer 103. For example, it may be that the surface at one side of the structurally fragile portion 101 facing the interior of the battery 600 is covered with a phosphorus-containing nickel plating layer 103; or, the surface (i.e., the first surface mentioned below) at one side of the structurally fragile portion 101 facing the interior of the battery 600 and the surface (i.e., the second surface mentioned below) at one side facing away from the battery interior are covered with a phosphorus-containing nickel plating layer 103. Furthermore, taking the example where the surface at one side of the structurally fragile portion 101 facing the interior of the battery 600 is covered with a phosphorus-containing nickel plating layer 103: it may be that the entire surface at one side of the structurally fragile portion 101 facing the interior of the battery 600 is covered with a phosphorus-containing nickel plating layer 103; or, it may also be that only a portion of the surface is covered with a phosphorus-containing nickel plating layer 103. For example, due to process or operational factors, the portion covered with the phosphorus-containing nickel plating layer 103 accounts for 80%, 90%, 95%, etc. of the total area of the structurally fragile portion 101, of course, the proportion of the phosphorus-containing nickel plating layer 103 may be more or less.

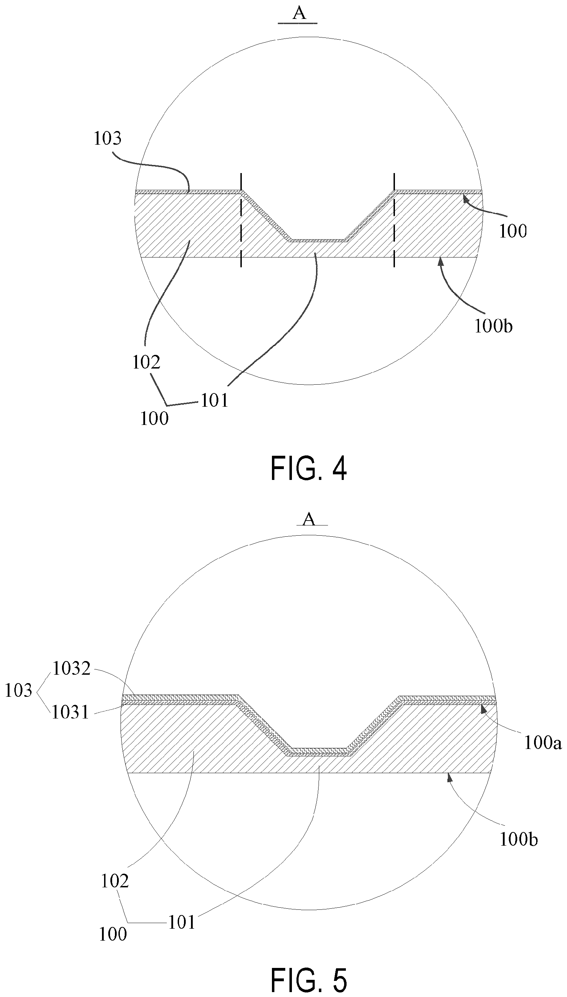

Understandably, the structurally fragile portion 101 may be formed by at least one processing technique such as thinning, stretching, stamping, cutting, etching, etc. on a portion of the structure of the cover plate 100. Therefore, when processing the structurally fragile portion 101, it is likely to cause damage to the nickel plating layer on the surface of the cover plate 100 (as shown in FIG. 4), resulting in the structurally fragile portion 101 being prone to rusting and corrosion. Additionally, when the nickel plating layer itself does not contain phosphorus element, the corrosion resistance ability may also be greatly reduced. In this embodiment, the structurally fragile portion 101 is covered with a phosphorus-containing nickel plating layer 103. In the processing of the cover plate 100, the structurally fragile portion 101 may be first processed, and then the phosphorus-containing nickel plating layer 103 is plated on the structurally fragile portion 101. This may both ensure that the phosphorus-containing nickel plating layer 103 is not damaged during the processing technique and greatly enhance the corrosion resistance ability of the cover plate 100, improving the reliability of the cover plate 100.

According to an embodiment of the present disclosure, the cover plate 100 may have a phosphorus-containing nickel plating layer 103 plated on the outside of at least a portion of the structurally fragile portion 101. During the processing of the cover plate 100, the phosphorus-containing nickel plating process may be conducted after the structurally fragile portion 101 is processed, so that the phosphorus-containing nickel plating layer 103 covers the structurally fragile portion 101 and is not damaged in the processing of the structurally fragile portion 101. Since the phosphorus-containing nickel plating layer 103 contains phosphorus element, it may greatly enhance the corrosion resistance ability of the cover plate 100, thus ensuring that when the battery 600 is in use, no rusting and corrosion occur at the structurally fragile portion 101, the structure of the cover plate 100 is reliable, and the service life thereof is prolonged. Moreover, when the battery 600 is stored at high temperature, there is no abnormal pressure drop, and the power supply performance is reliable.

In some embodiments, in conjunction with FIG. 4 and FIG. 5, the cover plate 100 may include a first surface 100a and a second surface 100b, where the first surface 100a and the second surface 100b are opposite to each other along the thickness direction (i.e., the axial direction of the battery 600) of the cover plate 100. For example, the first surface 100a may be an inner surface of the cover plate 100 facing the interior of the battery 600, and the second surface 100b may be an outer surface of the cover plate 100 facing the exterior of the battery 600.

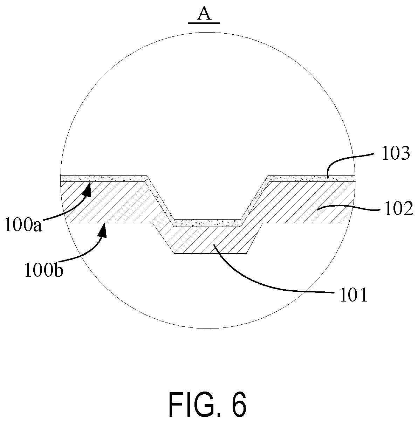

A portion of the structure of the first surface 100a is recessed towards the second surface 100b to form a groove, and the portion of the cover plate 100 corresponding to the groove constitutes a structurally fragile portion 101, that is, the structurally fragile portion 101 surrounds the periphery and bottom of the groove. A portion of the surface of the structurally fragile portion 101 serves as the side wall of the groove, and another portion of the surface serves as the bottom wall of the groove. For example, as shown in FIG. 6, both the first surface 100a and the second surface 100b may be concaved outward, and both the inner and outer surfaces of the structurally fragile portion 101 are stretched, which may reduce the structural strength at the structurally fragile portion 101; or, as shown in FIG. 4 to FIG. 5, only the first surface 100a may be subjected to stamping or etching. In this case, only the first surface 100a is concaved outward, which may also reduce the structural strength at the structurally fragile portion 101. The cross-section of the groove formed by the outward concave may be trapezoidal, V-shaped, or U-shaped. The phosphorus-containing nickel plating layer 103 covers the groove wall of the structurally fragile portion 101, and the groove wall includes the aforementioned side wall and bottom wall. As such, the structure of the structurally fragile portion 101 is relatively simple and easy to implement.

In addition to the above-mentioned method, it may also be constructed such that the material of the structurally fragile portion 101 is different from the material of the non-structurally fragile portion 102, and the strength of the material of the structurally fragile portion 101 is lower than the strength of the material of the non-structurally fragile portion 102.

It may be understood that, due to the stamping of the cover plate, the nickel plating layers on both the first surface and the second surface of the cover plate may be damaged to a certain extent, which might cause rusting and corrosion problems on both the first surface and the second surface. Therefore, the cover plate 100 of this embodiment may have phosphorus-containing nickel plating layers 103 set on both the first surface 100a and the second surface 100b, that is, the phosphorus-containing nickel plating layers 103 cover the surfaces on both sides of the structurally fragile portion 101, to ensure that no rusting and corrosion problems occur at the structurally fragile portion 101 of the cover plate 100.

In some embodiments, referring to FIG.4 and FIG.5, the thickness of the structurally fragile portion 101 is smaller than the thickness of the non-structurally fragile portion 102. Here, the thickness refers to the distance from any position on the groove wall to the second surface of the cover plate 100. Moreover, the thickness of the structurally fragile portion 101 refers to the minimum thickness of the structurally fragile portion 101, and the thickness of the non-structurally fragile portion 102 refers to the minimum thickness of the non-structurally fragile portion 102. For example, a groove may be formed on a portion of the structure of the cover plate 100 through stamping or etching and so on, where the bottom wall portion of the groove is the structurally fragile portion 101. At this time, compared to the non-structurally fragile portion 102, the structurally fragile portion 101 has a smaller thickness and lower structural strength due to the removal of a portion of the structure. When the battery 600 undergoes thermal runaway, it is possible to guide high-temperature and high-pressure gas to rupture the cover plate 100 at the structurally fragile portion 101, achieving discharge. As such, the construction of the structurally fragile portion 101 is relatively simple and easy to implement.

In some embodiments, the phosphorus-containing nickel plating layer 103 at least partially covers the non-structurally fragile portion 102. For example, the phosphorus-containing nickel plating layer 103 may cover a portion of the non-structurally fragile portion 102; or, the phosphorus-containing nickel plating layer 103 may also completely cover the non-structurally fragile portion 102. Preferably, the phosphorus-containing nickel plating layer 103 completely covers the non-structurally fragile portion 102. At this time, the phosphorus-containing nickel plating layer 103 may simultaneously cover the structurally fragile portion 101 and the non-structurally fragile portion 102. Since the phosphorus-containing nickel plating layer 103 covering the structurally fragile portion 101 and the non-structurally fragile portion 102 may be formed in one process, it does not increase the complexity of the formation process of the phosphorus-containing nickel plating layer 103. Moreover, it is possible to prevent rusting and corrosion of the non-structurally fragile portion 102, thereby improving the overall reliability of the cover plate 100.

In some embodiments, the phosphorus content in the phosphorus-containing nickel plating layer 103 ranges from 2wt% to 20wt%. In other words, by mass percentage, the content of phosphorus element in the phosphorus-containing nickel plating layer 103 ranges from 2% to 20%. For example, the content of phosphorus element in the phosphorus-containing nickel plating layer 103 is 2%, 4%, 6%, 8%, 10%, 12%, 14%, 15%, 16%, 18%, or 20%. In this way, it is possible to prevent the phosphorus content from being too low, such as less than 2wt%, which may lead to poor corrosion resistance of the phosphorus-containing nickel plating layer 103. It is also possible to avoid excessive phosphorus content, such as higher than 20wt%, which may result in reduced hardness and corrosion resistance of the phosphorus-containing nickel plating layer 103. Of course, the present disclosure is not limited thereto, and the phosphorus content in the phosphorus-containing nickel plating layer 103 may be reasonably selected within the above range according to actual needs.

Optionally, the phosphorus content in the phosphorus-containing nickel plating layer 103 is 4wt% to 20wt%. For example, in terms of mass percentage, the phosphorus content in the phosphorus-containing nickel plating layer 103 may be 4%, 5%, 6%, 7%, 8%, 9%, 10%, 11%, 12%, 13%, 14%, 15%, 16%, 17%, 18%, 19%, or 20%. Of course, the present disclosure is not limited thereto, and the phosphorus content in the phosphorus-containing nickel plating layer 103 may be reasonably selected within the above range according to actual needs.

Further, the phosphorus content in the phosphorus-containing nickel plating layer 103 is 4wt% to 15wt%. For example, in terms of mass percentage, the phosphorus content in the phosphorus-containing nickel plating layer 103 may be 4%, 5%, 6%, 7%, 8%, 9%, 10%, 11%, 12%, 13%, 14% or 15%. Of course, the present disclosure is not limited thereto, and the phosphorus content in the phosphorus-containing nickel plating layer 103 may be reasonably selected within the above range according to actual needs.

Furthermore, the phosphorus content in the phosphorus-containing nickel plating layer 103 ranges from 4wt% to 11wt%. By setting the lower limit of the phosphorus content in the phosphorus-containing nickel plating layer 103 to 4wt%, corrosion may be better avoided during high temperature storage. For example, in terms of mass percentage, the phosphorus content in the phosphorus-containing nickel plating layer 103 may be 4%, 4.5%, 5%, 5.5%, 6%, 6.5%, 7%, 7.5%, 8%, 8.5%, 9%, 9.5%, 10%, 10.5% or 11%. Of course, the present disclosure is not limited to these values, and the phosphorus content in the phosphorus-containing nickel plating layer 103 may be reasonably selected within the aforementioned range according to actual needs.

In some embodiments, the thickness of the phosphorus-containing nickel plating layer 103 ranges from 2µm to 6µm. For example, the thickness of the phosphorus-containing nickel plating layer 103 may be 2µm, 3µm, 4µm, 5µm or 6µm. Of course, the present disclosure is not limited to this, and the thickness of the phosphorus-containing nickel plating layer 103 may be reasonably selected within the above range according to actual needs. In this way, it is possible to avoid the thickness of the phosphorus-containing nickel plating layer 103 being too large, for example, greater than 6µm, which might easily lead to a decrease in the adhesion effect of the phosphorus-containing nickel plating layer 103 and powder shedding during the bending test of the cover plate 100. It is also possible to avoid the thickness of the phosphorus-containing nickel plating layer 103 being too small, for example, less than 2µm, which may result in poor corrosion resistance of the phosphorus-containing nickel plating layer 103. It should be noted that the phosphorus-containing nickel plating layer 103 in this embodiment is a single layer.

In some other embodiments, referring to FIG. 5, the phosphorus-containing nickel plating layer 103 may include: a first nickel plating layer 1031 and a second nickel plating layer 1032. Specifically, the first nickel plating layer 1031 may cover the first surface of the cover plate 100, and the second nickel plating layer 1032 may be located on the outer side of the first nickel plating layer 1031, that is, the first nickel plating layer 1031 and the second nickel plating layer 1032 are arranged in a stacked manner.

The second nickel plating layer 1032 at least covers a portion of the first nickel plating layer 1031 that is opposite to the structurally fragile portion 101, and the second nickel plating layer 1032 contains phosphorus element. In other words, the second nickel plating layer 1032 may completely cover the first nickel plating layer 1031, or may only cover a portion of the first nickel plating layer 1031 that is opposite to the structurally fragile portion 101. The phosphorus element in the phosphorus-containing nickel plating layer 103 may only exist in the second nickel plating layer 1032, or both the first nickel plating layer 1031 and the second nickel plating layer 1032 may contain phosphorus element. As such, the second nickel plating layer 1032 and the first nickel plating layer 1031 may enhance the corrosion resistance and rust prevention ability of the cover plate 100, thereby better protecting the cover plate 100.

It may be understood that when the phosphorus-containing nickel plating layer 103 in this embodiment is disposed on the second surface 100b of the cover plate 100, the setting method and formation process of the first nickel plating layer 1031 and the second nickel plating layer 1032 on the second surface 100b may be the same as those on the first surface 100a. In this way, when the battery 600 is exposed to air, it is possible to prevent the second surface 100b of the cover plate 100 from rusting, thereby better protecting the cover plate 100. Preferably, the second surface 100b only contains the first nickel plating layer 1031 or the second nickel plating layer 1032, because it only faces the exterior of the housing, and also serves the purpose of preventing rusting. The second surface 100b may also contain both the first nickel plating layer 1031 and the second nickel plating layer 1032, which provides a better effect in preventing rusting.

Optionally, the first nickel plating layer 1031 may be formed in a pre-nickel plating process conducted on the cover plate 100, and the second nickel plating layer 1032 may be formed in a post-nickel plating process conducted on the cover plate 100. Here, pre-nickel plating refers to the nickel plating process occurring before the process of forming the structurally fragile portion 101, while post-nickel plating refers to the nickel plating process occurring after the process of forming the structurally fragile portion 101. In this way, even if the first nickel plating layer 1031 is damaged during the process of processing the structurally fragile portion 101, the phosphorus-containing second nickel plating layer 1032 may still cover the damaged position of the first nickel plating layer 1031, namely the structurally fragile portion 101, in the subsequent post-nickel plating process, thereby enhancing the rust and corrosion resistance ability of the cover plate 100.

Of course, the present disclosure is not limited thereto. The pre-nickel plating may also be positioned after the process of the structurally fragile portion 101 and before the post-nickel plating process.

In some embodiments, the phosphorus-containing nickel plating layer 103 may be formed by at least one nickel plating process selected from electroplating and electroless plating. For example, when the phosphorus-containing nickel plating layer 103 is a single layer, the phosphorus-containing nickel plating layer 103 may be formed by any one of the nickel plating processes of electroplating and electroless plating. When the phosphorus-containing nickel plating layer 103 is a double layer or multiple layers, i.e., the phosphorus-containing nickel plating layer 103 includes a first nickel plating layer 1031 and a second nickel plating layer 1032, the first nickel plating layer 1031 and the second nickel plating layer 1032 may both adopt the electroplating nickel process, or may both adopt the electroless nickel plating process, or one may adopt the electroplating nickel process and the other may adopt the electroless nickel plating process. As such, there are various types of nickel plating implementation methods for the phosphorus-containing nickel plating layer 103, which may be reasonably selected according to actual needs.

In some embodiments, the ratio of the thickness of the first nickel plating layer 1031 to the thickness of the second nickel plating layer 1032 is 0.5 to 1.5. For example, the ratio of the thickness of the first nickel plating layer 1031 to the thickness of the second nickel plating layer 1032 is 0.5, 0.6, 0.7, 0.8, 0.9, 1, 1.1, 1.2, 1.3, 1.4 or 1.5. Of course, the present disclosure is not limited thereto, and the ratio of the thickness of the first nickel plating layer 1031 to the thickness of the second nickel plating layer 1032 may be reasonably selected within the above range according to actual needs. In this way, the phosphorus-containing second nickel plating layer 1032 and the first nickel plating layer 1031 may have an appropriate ratio, thereby ensuring the corrosion resistance effect of the cover plate 100.

In some embodiments, when the phosphorus-containing nickel plating layer 103 is formed through pre-nickel plating process and post-nickel plating process, the thickness of the phosphorus-containing nickel plating layer 103 ranges from 5µm to 8µm. For example, the thickness of the phosphorus-containing nickel plating layer 103 may be 5µm, 6µm, 7µm or 8µm. In this way, it is possible to avoid the thickness of the phosphorus-containing nickel plating layer 103 being too large, such as greater than 6µm, which may easily lead to powder shedding and decrease the adhesion effect of the phosphorus-containing nickel plating layer 103. It is also possible to avoid the thickness of the phosphorus-containing nickel plating layer 103 being too small, such as less than 5µm, which may result in poor corrosion resistance of the phosphorus-containing nickel plating layer 103. It should be noted that the thickness of the phosphorus-containing nickel plating layer 103 in this embodiment refers to the total thickness of the first nickel plating layer 1031 and the second nickel plating layer 1032.

Considering that when the phosphorus-containing nickel plating layer 103 is a double-layer or multi-layer structure, increasing the ratio of the phosphorus-containing portion in the phosphorus-containing nickel plating layer 103 may help to enhance the overall corrosion resistance ability of the cover plate 100. Therefore, in this embodiment, the thickness of the second nickel plating layer 1032 may be set to be greater than the thickness of the first nickel plating layer 1031. This may increase the ratio of the phosphorus-containing portion in the phosphorus-containing nickel plating layer 103, thereby improving the overall rust and corrosion resistance ability of the cover plate 100, ensuring the effectiveness and reliability of the phosphorus-containing nickel plating layer 103.

In some embodiments, the material of the cover plate 100 may be cold-rolled steel sheet. For example, the material of the cover plate 100 may be cold-rolled carbon steel sheets and strips for general use (SPCC). As such, the cover plate 100 may have good formability.

In other alternative embodiments, the cover plate 100 may also be constituted of at least one metal material such as aluminum, steel, nickel, etc.

The following describes a battery 600 according to an embodiment of the present disclosure.

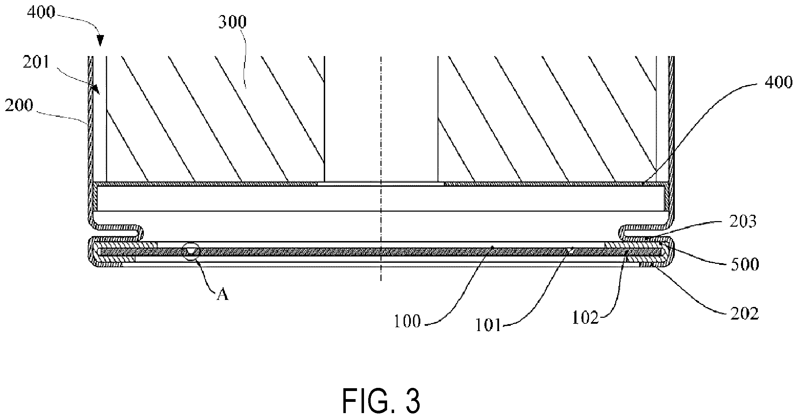

Referring to FIG. 2 and FIG. 3, the battery 600 of this embodiment, preferably a cylindrical battery 600, is vertically set due to its cylindrical shape, with the cover plate 100 located at the bottom. As a result, the cover plate 100 is in long-term contact with the electrolyte, making it more susceptible to corrosion. The battery 600 may include: an electrode assembly 300, a housing 200, and the cover plate 100 from the aforementioned embodiment.

Specifically, the electrode assembly 300 includes a positive electrode sheet, a negative electrode sheet, and a separator. The positive electrode sheet, separator, and negative electrode sheet are sequentially stacked and wound to form the electrode assembly 300, that is, the electrode assembly 300 is a wound cell. After winding, the electrode assembly 300 may be in a cylindrical shape, a flat shape, or a multi-prismatic shape, etc.

The housing 200 may be a component that can accommodate the electrode assembly 300 together with the cover plate 100. The housing 200 may be a steel housing or made of other materials. The housing 200 is cylindrical and defines an accommodating cavity 201. The housing 200 has an installation opening at one end along the axial direction. The electrode assembly 300 is disposed inside the accommodating cavity 201. The housing 200 is connected to the negative electrode of the electrode assembly 300, meaning the housing 200 carries a negative charge. The cover plate 100 is disposed at the installation opening and seals the accommodating cavity 201. The other end of the housing 200 along the axial direction may serve as a top plate. The battery 600 also has an electrode pillar, which may pass through the top plate and connect to the positive electrode of the electrode assembly 300. Of course, the electrode pillar and the housing 200 are in an insulated fitting state to avoid short-circuiting of the battery 600. In some embodiments, one side of the housing 200 facing the electrode assembly 300 contains a phosphorus-containing nickel plating layer 103, because this side contacts the electrolyte. By setting up the phosphorus-containing nickel plating layer 103, the inner side of the housing 200 may not be easily corroded.

Since the cover plate 100 is disposed at the negative electrode end of the battery 600, when the battery 600 is vertically placed in the overall layout of the new energy vehicle and the cover plate 100 is set facing downward, due to the structurally fragile portion 101 being set on the cover plate 100, when thermal runaway occurs in the battery 600, the high-temperature and high-pressure discharge substances inside may rupture the structurally fragile portion 101 from the bottom of the battery 600 and be discharged downward to the outside, avoiding upward discharge into the driving cabin, thereby achieving good guidance of the discharge materials.

In addition, the phosphorus-containing nickel plating layer 103 on the outer side of the structurally fragile portion 101 of the cover plate 100 may protect the structure of the structurally fragile portion 101 from corrosion damage, thereby ensuring that the structurally fragile portion 101 may timely and effectively serve to guide the directional discharge of the discharge substances when short-circuiting occurs in the battery 600.

According to an embodiment of the present disclosure, the battery 600, by setting the cover plate 100 in the above-mentioned embodiment, may avoid rusting and corrosion problems of the cover plate 100, improve the reliability of the cover plate 100, and avoid abnormal voltage drop of the battery 600 during high-temperature storage, thus ensuring the power supply performance of the battery 600.

In some embodiments, the cover plate 100 may be insulated from the housing 200 and spaced apart from the electrode assembly 300. In other words, when the housing 200 carries a negative charge, the cover plate 100 may not be electrically charged. As such, even when the cover plate 100 is not electrically charged, the phosphorus-containing nickel plating layer 103 on the outer side of the cover plate 100 may still effectively prevent the cover plate 100 from being corroded, thereby ensuring the reliability of the battery 600.

In some embodiments, a curled edge portion 202 may be disposed at the periphery of the installation opening, the curled edge portion 202 extends inward along the radial direction of the housing 200, and a crimping portion 203 protruding inward is also set at the position of the housing 200 adjacent to the installation opening. For example, the crimping portion 203 may be separately formed on the inner wall of the housing 200, or the crimping portion 203 may also be formed by bending a portion of the structure of the housing 200 inward. The crimping portion 203 and the curled edge portion 202 are spaced apart along the axial direction of the housing 200. The crimping portion 203 and the curled edge portion 202 may jointly clamp the cover plate 100, with the electrode assembly 300 and the cover plate 100 located on opposite sides of the crimping portion 203 along the axial direction of the housing 200. At this time, the curled edge portion 202 and the crimping portion 203 jointly provide support and positioning for the cover plate 100, ensuring the installation stability of the cover plate 100, while the crimping portion 203 may also separate the cover plate 100 from the electrode assembly 300, thereby further ensuring that the cover plate 100 is not connected to the negative electrode of the electrode assembly 300, realizing that the cover plate 100 is not electrified. Moreover, the overall structure is relatively simple and easy to implement.

In some embodiments, the battery 600 may also include a plastic member 500, the plastic member 500 is arranged around the periphery of the cover plate 100 to separate the cover plate 100 from the housing 200. For example, the plastic member 500 may be a sealing ring, the plastic member 500 wraps around the peripheral edge of the cover plate 100. Under the circumstances, the plastic member 500 may cover the side portion of the cover plate 100 as well as portions of the first surface and the second surface, thereby better separating the cover plate 100 from the housing 200.

In some embodiments, the crimping portion 203 may be formed by the peripheral wall of the housing 200 recessing inward. In other words, the crimping portion 203 of this embodiment is not separately formed on the inner wall of the housing 200, but is formed by bending a portion of the structure of the housing 200 inward. Under the circumstances, a roller groove structure may be formed on the outer wall of the housing 200. In this way, the structure of the housing 200 may be further simplified, facilitating processing and also facilitating the overall assembly of the battery 600.

In some embodiments, the battery 600 may further include a negative electrode current collector plate 400. The negative electrode current collector plate 400 is disposed on one side of the crimping portion 203 facing the electrode assembly 300. The negative electrode current collector plate 400 includes a plate body and a connecting portion. The plate body may be welded to the negative electrode tab of the electrode assembly 300. The connecting portion is located at the periphery of the plate body. The connecting portion is connected to the housing 200, thereby making the housing 200 negatively charged. The negative electrode current collector plate 400 may be arranged at an interval from the crimping portion 203. In this way, it is possible to better realize current conduction. Moreover, the negative electrode current collector plate 400 may serve to separate the electrode assembly 300 from the cover plate 100. The material of the housing 200 is steel. The materials of the housing 200 and the cover plate 100 are the same, which may ensure that when the cover plate and the housing 200 are connected, the force applied may be more uniform and the connection may be better.

It should be further noted that the electronic device of this embodiment, by setting the battery 600 described in the above-mentioned embodiment, may stably and reliably power the device body, ensuring normal power supply for the electronic device, which is conducive to improving user experience.

The following are some implementation steps for plating a phosphorus-containing nickel plating layer 103 on the cover plate 100.

S101. Performing pretreatment on the surface of the cover plate 100:

In order to obtain a uniform, low-porosity, and well-bonded phosphorus-containing nickel plating layer 103 on the surface of the cover plate 100, before applying the plating to the surface of the cover plate 100, the surface of the cover plate 100 is pretreated in the following order: sandblasting for rust removal - alkaline boiling for degreasing - tap water rinsing - acid pickling and rust removal to activate the metal surface - tap water rinsing - hot water rinsing.

S102. Performing nickel plating:

After performing the pre-treatment, the cover plate 100 is plated. The main ingredients of the Ni-P plating solution are nickel sulfate, sodium hypophosphite, complexing agent, buffer agent, brightener, etc. The plating solution is heated to 85°C, and the pH value is adjusted to 4.5 to 6. The deposition rate is about 10tan/h, and the processing time is set according to the thickness of the cover plate 100.

S103. Performing post-plating treatment:

The plated workpiece, namely the cover plate 100, is rinsed with water, and then placed in a sealing solution for sealing treatment to enhance the corrosion resistance of the phosphorus-containing nickel plating layer 103. After sealing, the cover plate 100 is immediately and thoroughly washed and blown dry.

**Table 1 Comparison table of test results for cover plates between examples and comparative examples of the present disclosure, where a phosphorus-containing nickel plating layer 103 is formed on the cover plate 100 using a pre-nickel plating + post-nickel plating process.**

| | Comparative example 1 | Comparative example 2 | Comparativ e example 3 | Example 1 | Example 2 | Example 3 | Example 4 | Example 5 |
|---|---|---|---|---|---|---|---|---|
| Pre-nickel plating | Phosphorus-free | Phosphorus-free | Phosphorus -free | Phosphorus -free | Phosphoru s-free | Phosphoru s-free | Phosphoru s-free | Phosphoru s-free |
| Post nickel plating | None | Electro-plating without phosphorus | Electroless plating without phosphorus | Phosphorus -containing electroless plating | Phosphoru s-containing electro-plating | Phosphoru s-containing electroless plating | Phosphoru s-containing electroless plating | Phosphoru s-containing electroless plating |
| Thickness (µm) of nickel plating layer | 3.5 | 7.2 | 4.6 | 10.9 | 6.3 | 5.1 | 8.0 | 5.06 |
| Bending test | Good | Good | Good | Powder shedding | Good | Good | Good | Good |
| High-temperature storage | Corrode | Corrode | Corrode | No abnormal voltage drop | No abnormal voltage drop | No abnormal voltage drop | No abnormal voltage drop | No abnormal voltage drop |

Specifically, in Comparative Example 1, the surface of the cover plate is only treated by a pre-nickel plating process, and the formed nickel plating layer does not contain phosphorus. In Comparative Example 2, the surface of the cover plate is treated by a pre-nickel plating process and a post-nickel plating process respectively, wherein the pre-nickel plating layer formed in the pre-nickel plating process does not contain phosphorus, and the post-nickel plating process adopts an electroplating nickel process, and the formed post-nickel plating layer does not contain phosphorus. In Comparative Example 3, the surface of the cover plate is treated by a pre-nickel plating process and a post-nickel plating process respectively, wherein the pre-nickel plating layer formed in the pre-nickel plating process does not contain phosphorus, and the post-nickel plating process adopts an electroless nickel plating process, and the formed post-nickel plating layer does not contain phosphorus. Examples 1-4 all adopt the solution of the present disclosure, wherein the first nickel plating layer 1031 formed by the pre-nickel plating process does not contain phosphorus, and the second nickel plating layer 1032 formed by the post-nickel plating process contains phosphorus element, wherein the post-nickel plating process in Example 1 and Examples 2-5 is electroless plating, and the post-nickel plating process in Example 2 is electroplating.

It needs to be explained that the electroplating in the Table refers to the process of plating a nickel layer on the surface of the cover plate (i.e., SPCC cover plate) through the principle of electrolysis. The electroless plating in the Table refers to the process where nickel ions in the solution are deposited on the surface of the cover plate (i.e., SPCC cover plate) through chemical reduction to form a nickel layer.

Through bending tests and EDS analysis of the cover plates 100 in Comparative Examples 1-3 and Examples 1-5, it may be seen that the cover plate 100 in the embodiment of the present disclosure, by adopting a pre-nickel plating + post-nickel plating process, forms a nickel plating layer containing phosphorus. When the battery 600 is stored at a relatively high temperature, the battery 600 shows no abnormal pressure drop. Furthermore, while meeting the high-temperature storage test requirements, to further improve the bending test results, when the overall thickness of the nickel plating layer is between 5µm to 8µm, it is possible to avoid the powder shedding phenomenon caused by an excessively thick nickel plating layer, making the phosphorus-containing nickel plating layer 103 adhere better to the cover plate 100. As such, the cover plate 100 in the embodiment of the present disclosure is conducive to the overall power supply performance of the battery 600.

Specifically, the test principle of high-temperature storage is as follows:

For batteries adopting ternary materials (for example, lithium nickel cobalt manganese composite metal oxide): the batteries are charged at a constant current with a 0.5C rate to 4.2V, then stored at 70°C for 20 days, and the battery voltage is measured. Batteries with voltage less than 4.0V are listed as having abnormal voltage drop, while those with voltage greater than or equal to 4.0V are considered to have no abnormal voltage drop.

For batteries adopting lithium iron phosphate material: the batteries are charged at a constant current with a 0.5C rate to 3.6V, then stored at 70°C for 20 days, and the battery voltage is measured. Batteries with voltage less than 3.4V are listed as having abnormal voltage drop, while those with voltage greater than or equal to 3.4V are considered to have no abnormal voltage drop.

The specific testing principle of the bending test is as follows: the cover plate 100 is bent along a cylindrical rod with a diameter of 10mm, with a bending angle of 45°, simulating the deformation state of the cover plate 100 during the later stages of battery cell cycling and gas generation. By comparing the level of metal particles before and after bending, the adhesion ability of the nickel plating layer is evaluated, and it is determined whether the nickel layer shows powder shedding or remains in a normal state.

**Table 2 Comparison table of test results for cover plates between examples and comparative examples of the present disclosure using post-nickel plating process to form phosphorus-containing nickel plating layer 103 on cover plate 100**

| | Comparative example 4 | Example 6 | Example 7 | Example 8 | Example 9 | Example 10 |
|---|---|---|---|---|---|---|
| Post nickel plating | None | Positive | Positive | Positive | Positive | Positive |
| Thickness (µm) of nickel plating layer | 0 | 1 | 2 | 4 | 6 | 7 |
| Bending test | Free of metal debris | Free of metal debris | Free of metal debris | Free of metal debris | Free of metal debris | Some metal debris |
| High-temperature storage | Corrode | Corrode | No abnormal voltage drop | No abnormal voltage drop | No abnormal voltage drop | No abnormal voltage drop |

The surface of the cover plate in Comparative Example 4 is not nickel plated; while Examples 6-10 all adopt the solution of the present disclosure that adopt a post-nickel plating process to form a phosphorus-containing nickel plating layer on the cover plate 100, where the post-nickel plating process is electroless plating.

First, a high-temperature storage test is conducted on the battery 600. As shown in Table 2, when the battery 600 is stored at high temperature, there is no abnormal pressure drop in the battery 600. Furthermore, a bending test is performed on the cover plate of the battery 600. It may be observed that when the overall thickness of the nickel plating layer is between 2µm and 6µm, it is possible to avoid the powder shedding phenomenon caused by excessive thickness of the nickel plating layer, resulting in better adhesion of the phosphorus-containing nickel plating layer 103 to the cover plate 100. As such, the cover plate 100 in this embodiment of the present disclosure is conducive to the overall power supply performance of the battery 600.

**Table 3 Comparison Table of test results for embodiments of the present disclosure using post-nickel plating process to form phosphorus-containing nickel plating layer 103 on cover plate 100**

| | Example 11 | Example 12 | Example 13 | Example 14 | Example 15 |
|---|---|---|---|---|---|
| Post nickel plating | Positive | Positive | Positive | Positive | Positive |
| Phosphorus content (wt) | 1% | 2% | 4% | 11% | 20% |
| Bending test | Free of metal debris | Free of metal debris | Free of metal debris | Free of metal debris | Free of metal debris |
| High-temperature storage | Corrode | No abnormal voltage drop | No abnormal voltage drop | No abnormal voltage drop | No abnormal voltage drop |

Specifically, Examples 11-15 all adopt the solution of the present disclosure that adopt a post-nickel plating process to form a phosphorus-containing nickel plating layer 103 on the cover plate 100. The post-nickel plating process is electroless plating, with a phosphorus content of 2wt% to 20wt%.

First, a high-temperature storage test is conducted on the battery 600. As may be seen from Table 3, the cover plate 100 in Examples 11-15 shows no corrosion, and the battery 600 exhibits no abnormal pressure drop. Furthermore, a bending test is performed on the cover plate of the battery 600, and it may be found that the phosphorus-containing nickel plating layer 103 adheres better to the cover plate 100.

It may be noted that in the above Tables, the corrosion resistance test results of the cover plate 100 in each embodiment are obtained by conducting a salt spray rust test on the cover plate 100 in a laboratory environment, where the cover plate 100 is placed in a salt spray environment for 2 hours. From this, it can be seen that the cover plate 100 in the embodiments of the present disclosure, by having the nickel plating layer contain a specific ratio (such as 2wt% to 20wt%, preferably 4wt% to 11wt%) of phosphorus element, ensures that the surface of the cover plate 100 shows no signs of rusting or corrosion. This may significantly improve the corrosion resistance ability of the cover plate 100, ensuring the reliability of the battery 600.

It should be pointed out that "an embodiment", "embodiment", "exemplary embodiment", "some embodiments" and the like mentioned in the specification may include specific features, structures or characteristics, but not every embodiment necessarily includes such specific features, structures or characteristics. Moreover, such phrases do not necessarily refer to the same embodiment. Furthermore, when describing specific features, structures or characteristics in conjunction with embodiments, implementing such features, structures or characteristics in combination with other embodiments explicitly or implicitly described is within the knowledge of those skilled in the art.

In general, terms should be understood at least partially based on their contextual usage. For example, at least partially according to the context, the term "one or more" used in the text may be used to describe any feature, structure or characteristic in a singular sense, or may be used to describe a combination of features, structures or characteristics in a plural sense. Similarly, at least partially according to the context, terms such as "a" or "the" may also be understood to convey singular usage or plural usage.

It may be easily understood that "on", "above", and "over" in this disclosure should be interpreted in the broadest manner, such that "on" not only means "directly on something", but also includes the meaning of "on something" with intermediate features or layers therebetween, and "above" or "over" not only includes the meaning of "above" or "over something", but may also include the meaning of "above" or "over something" without intermediate features or layers therebetween (i.e., directly on something).

In addition, for ease of explanation, spatial relative terms may be used in the text, such as "below", "beneath", "lower", "above", "upper", etc., to describe the relationship of one element or feature relative to other elements or features as shown in the figures. The spatial relative terms are intended to encompass different orientations of the device in use or operation in addition to the orientation depicted in the figures. The device may have other orientations (rotated 90 degrees or at other orientations), and the spatial relative descriptive words used in the text may be interpreted accordingly.

## Claims

1. A cover plate (100) for a battery (600), **characterized in that** the cover plate (100) comprises an integrally formed non-structurally fragile portion (102) and a non-structurally fragile portion (101), a structural strength of the non-structurally fragile portion (101) is lower than a structural strength of the non-structurally fragile portion (102), the non-structurally fragile portion (101) is configured to be destroyed when the battery (600) releases internal pressure, at least a portion of the non-structurally fragile portion (101) is covered with a phosphorus-containing nickel plating layer (103).

2. The cover plate (100) according to claim 1, wherein the cover plate (100) comprises a first surface (100a) and a second surface (100b) that are opposite to each other along a thickness direction thereof, a portion of a structure of the first surface (100a) is recessed towards the second surface (100b) to form a groove, a portion of the cover plate (100) corresponding to the groove constitutes the non-structurally fragile portion (101), and
the phosphorus-containing nickel plating layer (103) covers a wall of the groove.

3. The cover plate (100) according to claim 2, wherein a thickness of the non-structurally fragile portion (101) is less than a thickness of the non-structurally fragile portion (102);
the cover plate (100) is made of steel.

4. The cover plate (100) according to claim 2, wherein the phosphorus-containing nickel plating layer (103) at least partially covers the non-structurally fragile portion (102).

5. The cover plate (100) according to any one of claims 1-4, wherein a phosphorus content in the phosphorus-containing nickel plating layer (103) ranges from 2wt% to 20wt%.

6. The cover plate (100) according to claim 5, wherein the phosphorus content in the phosphorus-containing nickel plating layer (103) ranges from 4wt% to 11wt%.

7. The cover plate (100) according to any one of claims 1-4, wherein a thickness of the phosphorus-containing nickel plating layer (103) ranges from 2µm to 6µm.

8. The cover plate (100) according to any one of claims 1-4, wherein the phosphorus-containing nickel plating layer (103) comprises:
a first nickel plating layer (1031), the first nickel plating layer (1031) covering the first surface (100a) of the cover plate (100);
a second nickel plating layer (1032), the second nickel plating layer (1032) being located on an outer surface of the first nickel plating layer (1031) away from the cover plate (100), the second nickel plating layer (1032) containing phosphorus element.

9. The cover plate (100) according to claim 8, wherein a ratio of a thickness of the first nickel plating layer (1031) to a thickness of the second nickel plating layer (1032) ranges from 0.5 to 1.5.

10. The cover plate (100) according to claim 8, wherein a thickness of the phosphorus-containing nickel plating layer (103) ranges from 5 µm to 8 µm.

11. A battery (600), comprising:
an electrode assembly (300);
a housing (200), wherein the housing (200) comprises an accommodating cavity (201), the housing (200) has an installation opening at one end along an axial direction, the electrode assembly (300) is disposed in the accommodating cavity (201), one side of the housing (200) facing the electrode assembly (300) contains a phosphorus-containing nickel plating layer (103);
the cover plate (100) according to any one of claims 1-10, wherein the cover plate (100) is disposed at the installation opening and seals the accommodating cavity (201).

12. The battery (600) according to claim 11, wherein
a periphery of the installation opening is provided with a curled edge portion (202) extending inward along a radial direction of the housing (200),
a position adjacent to the installation opening of the housing (200) is further provided with a crimping portion (203) protruding inward, the crimping portion (203) and the curled edge portion (202) are spaced apart along the axial direction of the housing (200) and jointly clamp the cover plate (100),
the electrode assembly (300) and the cover plate (100) are respectively located on opposite sides of the crimping portion (203) along the axial direction of the housing (200);
the battery (600) further comprises: a plastic member (500), which is arranged around a periphery of the cover plate (100) to separate and seal the cover plate (100) and the housing (200);
wherein the housing (200) is made of steel, and the battery (600) is a cylindrical battery.

13. An electronic device, comprising:
a device body, wherein the device body comprises a battery compartment;
the battery (600) according to claim 11 or 12, wherein the battery (600) is disposed in the battery compartment and electrically connected with the device body.
